**Europäisches Patentamt**

**European Patent Office**

**Office européen des brevets**

(19)

(11) Veröffentlichungsnummer: **0 157 166**
A2

## EUROPÄISCHE PATENTANMELDUNG

(12)

(21) Anmeldenummer: **85102115.4**

(22) Anmeldetag: **26.02.85**

(51) Int. Cl.⁴: **A 01 F 29/02,** A 01 F 29/16

(30) Priorität: **29.03.84 DE 3411671**

(43) Veröffentlichungstag der Anmeldung: **09.10.85**
**Patentblatt 85/41**

(84) Benannte Vertragsstaaten: **AT FR GB**

(71) Anmelder: **Klöckner-Humboldt-Deutz AG**
**Zweigniederlassung Fahr, D-7702 Gottmadingen (DE)**

(72) Erfinder: **Pürrer, Josef, Andreas Schramm Strasse 33,**
**D-8501 Feucht/Nbg. (DE)**
Erfinder: **Reinhard, Werner, Hegaustrasse 2,**
**D-7702 Mühlhausen/Ehingen (DE)**

(74) Vertreter: **Haft, Berngruber, Czybulka,**
**Hans-Sachs-Strasse 5, D-8000 München 5 (DE)**

(54) **Häckselmaschine.**

(57) Die Erfindung betrifft eine Häckselmaschine, bei der das zu häckselnde Erntegut in Richtung eines feststehenden Schneidmessers geführt wird, vor dem rotierende Schneidmesser angeordnet ist, die in axialer Richtung zur Einstellung des Häckselabstandes zwischen den Messern verstellbar sind. Die die Schneidmesser tragende Messerradnabe ist mit einem festsitzenden Lagerinnenring versehen, der in einem in einem ortsfesten Lagerflansch angeordneten Nadellager gelagert ist, wobei zwischen diesem Lager und einem die Messerwelle umgebenden Kugellager eine Federanordnung vorgesehen ist, die die Messerradnabe axial beaufschlagt und wobei eine Stellschraube mittels einer Sicherung gegen ungewolltes Verdrehen vorgesehen ist.

Die vorliegende Erfindung betrifft eine Häckselmaschine, bei der das zu häckselnde Erntegut in mindestens einem Zuführkanal in Richtung eines feststehenden Schneidmessers geführt wird, vor dem rotierende Schneidmesser angeordnet sind, die an einer Messerradnabe befestigt sind, welche in axialer Richtung zur Einstellung des Häckselabstandes zwischen feststehenden und rotierenden Schneidmessern verstellbar ist.

Bei der Ernte von Grünfutter wird üblicherweise der Futterstrom über mindestens einen Zuführkanal der eigentlichen Häckselanordnung zugeführt, wobei mit einem feststehenden Schneidmesser zusammenwirkende, rotierende Schneidmesser das Futter in kleine Stücke häckseln. Um eine gute Häckselleistung zu erzielen, ist es erforderlich, daß der Spalt zwischen dem feststehenden Schneidmesser und den rotierenden Schneidmessern einen konstanten Wert aufweist. Aufgrund der auftretenden Abnützung der Schneidmesser und deren Verkürzung aufgrund des Nachschleifens vergrößert sich jedoch während des Einsatzes einer derartigen Häckselmaschine der Spalt zwischen den rotierenden Schneidmessern und dem feststehenden Schneidmesser, so daß es erforderlich ist, diesen Spalt ab und zu neu zu justieren.

Aus der DE-AS 11 10 460 ist eine Häckselmaschine bekannt, bei der das Gut in einen Zuführkanal in Strangform unter Pressung über einem feststehenden Schneidmesser vorbeigeführt wird, vor dem ein Messerrad umläuft, wobei zum Regeln der Schnittlänge des zu häckselnden Gutes der Abstand des Messerrades von dem festen Messer einstellbar ist. Bei dieser bekannten Häckselmaschine ist die Messerradwelle,auf der das Messerrad fest verkeilt ist, in ihren Lagern verschiebbar angeordnet. Sie besitzt dazu an ihrem einen Ende ein Ansatzstück, das mit Außengewinde ausgerüstet ist und auf dem eine Büchse aufgeschraubt ist, die mit Innengewinde ausgerüstet ist. Die Büchse besitzt einen ringförmigen Ansatz, der mit seinen Ringflächen zwischen den Laufringen an Rollenlagern eingebettet ist, die wiederum in einem ortsfesten Gehäuse untergebracht sind, so daß bei Verdrehung der Büchse das Ansatzstück der Messerradwelle in die Büchse hinein oder aus ihr heraus geschoben wird. Die Büchse selbst ist ferner mit einer feststellenden Vorrichtung versehen, die nach Einstellung der Büchse und damit des Häckselabstandes deren weitere Verdrehung unmöglich macht.

Bei dieser bekannten Häckselmaschine werden die beim Häckseln entstehenden Radialkräfte über die außerhalb der Wirkebene liegende Profilverbindung übertragen, wodurch eine hohe Beanspruchung an diesen Teilen und damit ein schneller Verschleiß entsteht. Durch die hintereinander angeordneten Bauelemente, wie Messerrad, Messerradwelle, Büchse und Gegenlager entsteht eine große Baulänge, die überdies umständlich und zeitaufwendig einstellbar ist.

Es ist ferner aus der DE-OS 30 36 490 eine Schleifvorrichtung für landwirtschaftliche Scheibenrad-Häckselmaschinen bekannt, deren Messer zum Schleifen mit einer auf seiten der Gegenschneide vorgesehenen und bezüglich der Messerdrehachse außermittig angeordneten, über eine Zustellvorrichtung axial verstellbaren Schleifscheibe in Berührung bringbar sind und wobei die Schleifscheibe mit einer am Häckslergehäuse axial verschiebbar gelagerten Achse drehbar verbunden und mit dieser über die Kraft einer Feder selbsttätig in Richtung der Häckselmesser bis zu einer durch einen wählbaren Anschlag begrenzten Lage zustellbar ist.

Diese Anordnung betrifft ausschließlich die Einstellung einer Schleifscheibe für die Häckselmesser, wobei jedoch der Abstand zwischen feststehenden und rotierenden Schneidmessern nicht einstellbar ist.

Aufgabe der vorliegenden Erfindung ist es, eine Häckselmaschine zu schaffen, mit der eine schnelle und einfache

4

Axialverstellung der die rotierenden Schneidmesser tragenden Messerradnabe möglich ist, bei der der Lagerpunkt im wesentlichen in der Schneidebene der rotierenden Messer angeordnet ist und bei der die Lageranordnung für die Messerradnabe eine besonders kurze Baulänge aufweist.

Ausgehend von einer Häckselmaschine der eingangs näher genannten Art wird zur Lösung dieser Aufgabe vorgeschlagen, daß auf der die Schneidmesser tragenden Messerradnabe ein festsitzender Lagerinnenring angeordnet ist, daß dieser Lagerinnenring in einem im ortsfesten Lagerflansch angeordneten Lager gelagert ist, daß zwischen diesem Lager und einem weiteren, die Messerwelle umgebenden Lager eine Federanordnung vorgesehen ist, die die Messerradnabe axial beaufschlagt, daß eine in die Messerwelle eingreifende, sich auf der Messerradnabe abstützende Stellschraube vorgesehen ist und daß diese Stellschraube mit einer Sicherung gegen ungewolltes Verdrehen versehen ist.

Das im Lagerflansch angeordnete Lager kann vorteilhafterweise ein Nadellager sein, während das die Messerwelle umgebende Lager vorteilhafterweise ein Kugellager ist.

Bei einem bevorzugten Ausführungsbeispiel ist die Federanordnung eine Tellerfeder, deren eines Ende sich am drehenden Teil des Kugellagers abstützt und dessen anderes Ende sich am Ende der Messerradnabe abstützt.

Die Stellschraube kann mit einem Außengewinde versehen sein und die sie aufnehmende Öffnung in der Messerwelle mit einem daran angepaßten Innengewinde versehen sein, wobei die axiale Länge der Öffnung kleiner als die axiale Ausdehnung der Stellschraube ist.

Vorteilhafterweise ist zwischen dem Kopf der Stellschraube und dem durch sie beaufschlagten Ende der Messerradnabe ein Druck übertragender kragenförmiger Flansch vorgesehen.

Besonders vorteilhaft ist es, wenn die Sicherung für die Stellschraube aus einer Sperrscheibe besteht, die mit einer Aussparung versehen ist, welche an die Außenform des Stellschraubenkopfes angepaßt ist und diesen Kopf umschließt, wobei die Sperrscheibe über Führungszapfen mit der Messerradnabe verbunden ist und verschiebbar gegen den Druck mehrerer Federn gehalten ist.

Mit der erfindungsgemäßen Häckselmaschine wird der Vorteil erzielt, daß die Lagerung so gestaltet ist, daß das Traglager für die Messerradnabe etwa im Bereich der Schneidkanten der Häckselmesser liegt. Die Messerradnabe ist gegen die Nachstelleinrichtung durch Tellerfedern vorgespannt und die Nachstellschraube wird nach dem Einstellen
des Häckselspaltes automatisch wieder arretiert. Zum Entriegeln der Sicherung für die Stellschraube wird diese durch
Aufsetzen eines Steckschlüssels axial verschoben, wonach
die Stellschraube verdreht werden kann.

Da die Stellvorrichtung innerhalb des Messerradgehäuses
untergebracht ist, erhält man einebesonders kurze Baulänge.

Im folgenden wird die Erfindung anhand der Zeichnung näher
erläutert, in der ein vorteilhaftes Ausführungsbeispiel
dargestellt ist. Es zeigen:

Figur 1        einen waagrechten Schnitt durch eine erfindungsgemäße Häckselmaschine und

Figur 2        eine vergrößerte Darstellung der Lager- und
               Verstellanordnung für die Häckseleinrichtung.

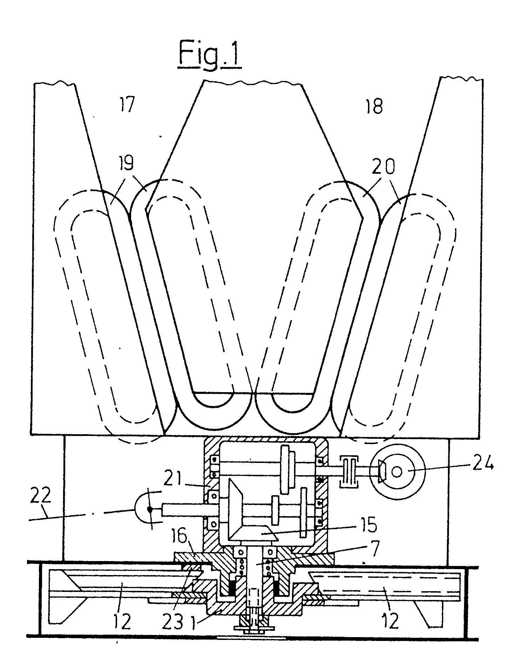

In Figur 1 sind mit 17 und 18 zwei konisch zulaufende
Zuführkanäle der schematisch dargestellten Häckselmaschine
bezeichnet, durch die das zu häckselnde Gut mittels gegensinnig laufender Förderbänder 19, 20 der Häckseleinrichtung zugeführt werden. Die Häckseleinrichtung wird über ein Winkelgetriebe 21, das durch die Kardanwelle 22 mit einem geeigneten Antrieb verbunden ist, betätigt, wobei mit 24 eine nicht näher bezeichnete Anordnung zum Antrieb der Einzugsorgane 19, 20 angedeutet ist.

Das Kegelrad 15 des Winkelgetriebes 21 ist nun mit einer Messerwelle 7 verbunden, die in einem Gehäuse 16 gelagert ist. An einer Messernabe 1 sind Messerträger 11 befestigt, an denen wiederum die rotierenden Schneidmesser 12 angeordnet sind, welche mit einem feststehenden Schneidmesser 23 zusammenwirken und das angelieferte Gut in kleine Stücke häckseln.

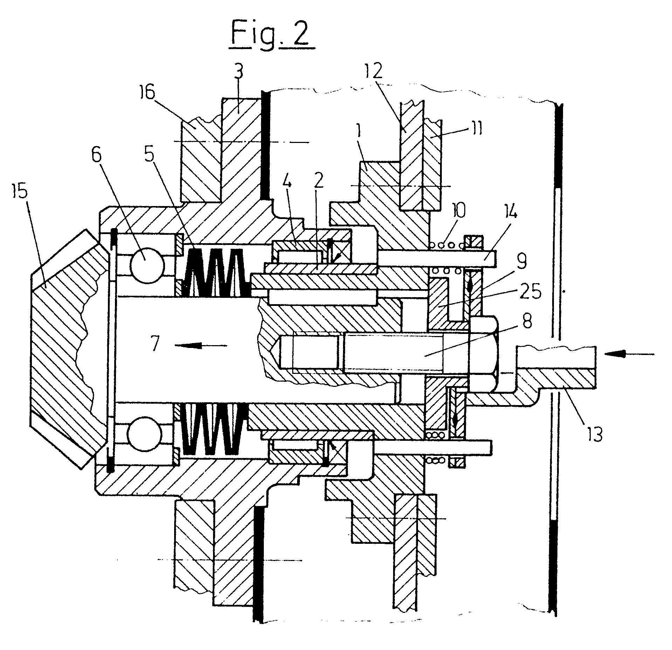

Aus der in Figur 2 vergrößert dargestellten Lager- und Verstellanordnung ist ersichtlich, daß die Messerradnabe 1 mit einem breiten Lagerinnenring 2, z.B. einem Nadellagerinnenring 2 versehen ist, der auf sie aufgezogen ist. Der Nadellagerinnenring 2 ist in einem im Lagerflansch 3 sitzenden Lager 4, das z.B. ein Nadellager sein kann, gelagert. Mit 5 ist ein Tellerfederpaket bezeichnet, das zwischen dem Lager 4 und einem weiteren, die Messerwelle umgebenden und z.B. als Kugellager 6 ausgestalteten Lager angeordnet ist und sich sowohl auf dem drehenden Teil des Kugellagers 6 als auch auf dem sich drehenden Teil des Nadel-

8

lagers 4 abstützt.

Mit 8 ist eine Stellschraube bezeichnet, die mit einem Außengewinde versehen sein kann, das in das Innengewinde einer in der Messerwelle 7 vorgesehenen Öffnung eingreift.

Der Kopf der Stellschraube 8 beaufschlagt einen kragenförmigen Flansch 25, der sich auf der Messernabe 1 abstützt. Mit 9 ist eine Sperrscheibe bezeichnet, die mit einer Aussparung versehen ist, die an die Außenform des Kopfes der Stellschraube 8, beispielsweise ein Sechskant, angepaßt ist und die durch die Kraft von mehreren Federn 10 beaufschlagt wird, welche Führungszapfen 14 umgeben, die die Sperrscheibe 9 sowie den Flansch 11 mit der Messernabe 1 drehfest verbinden.

Die Wirkungsweise ist wie folgt:
Um den Häckselspalt zwischen den rotierenden Schneidmessern 12 und dem feststehenden Schneidmesser 23 einstellen zu können, wird auf den Kopf der Stellschraube 8 ein Steckschlüssel 13 aufgesetzt, mit dem die Sperrscheibe 9 gegen den Druck der Feder 10 in axialer Richtung verschoben wird und zwar so weit, bis durch den Steckschlüssel 13 die Stellschraube 8 verdreht werden kann. Durch Einschrauben der Stellschraube 8 in die Messerwelle 7 beaufschlagt der Flansch 25 die Messernabe 1 und verschiebt diese axial, da sie mit dem breiten Lagerinnenring 2 im Nadellager 4 drehbar geführt ist. Das Tellerfederpaket 5 zwischen dem Nadellager 4 und dem Kugellager 6 wird beim Verschieben der Messerradnabe 1 auf der Messerradwelle 7 durch diese Stellschraube 8 komprimiert.

Nachdem der richtige Abstand zwischen den rotierenden Messern 12 und dem feststehenden Messer 23 eingestellt ist, wird der Steckschlüssel 13 entfernt, wodurch die Sperrscheibe 9 ihre ursprüngliche Stellung wieder einnimmt und den Kopf der Stellschraube 8 gegen ungewolltes Verdrehen sichert.

Der Lagerpunkt bleibt hier bei jeglicher Einstellung im wesentlichen an der optimalen Stelle, d.h. in der Schneidebene der Schneidmesser.

Klöckner-Humboldt-Deutz AG Zweigniederlassung Fahr

7702 Gottmadingen

Häckselmaschine

P a t e n t a n s p r ü c h e

1. Häckselmaschine, bei der das zu häckslende Erntegut
in mindestens einem Zuführkanal in Richtung eines feststehenden Schneidmessers geführt wird, vor dem rotierende Schneidmesser angeordnet sind, die an einer
Messerradnabe befestigt sind, welche in axialer Richtung zur Einstellung des Häckselabstandes zwischen
feststehenden und rotierenden Schneidmessern verstellbar ist, dadurch gekennzeichnet, daß auf der die
Schneidmesser (12) tragenden Messerradnabe (1) ein
festsitzender Lagerinnenring (2) angeordnet ist,
daß dieser Lagerinnenring (2) in einem im ortsfesten
Lagerflansch (3) angeordneten Lager (4) gelagert ist,
daß zwischen dem Lager (4) und einem weiteren, die
Messerwelle (7) umgebenden Lager (6) eine Federanordnung (5) vorgesehen ist, die die Messerradnabe (1) axial beaufschlagt, daß eine in die Messerwelle (7) eingreifende, sich auf der Messerradnabe (1) abstützende Stellschraube (8) vorgesehen ist, und daß diese Stellschraube (8) mit einer Sicherung (9, 10) gegen ungewolltes Verdrehen versehen ist.

2. Häckselmaschine nach Anspruch 1, dadurch gekennzeichnet, daß das im Lagerflansch (3) angeordnete Lager (4) ein Nadellager ist.

3. Häckselmaschine nach Anspruch 1, dadurch gekennzeichnet, daß das die Messerwelle umgebende Lager (6) ein Kugellager ist.

4. Häckselmaschine nach Ansprüchen 1 bis 3, dadurch gekennzeichnet, daß die Federanordnung (5) eine Tellerfeder ist, deren eines Ende sich am drehenden Teil des Kugellagers (6) abstützt und deren anderes Ende sich am Ende der Messerradlager (1) abstützt.

5. Häckselmaschine nach Ansprüchen 1 bis 4, dadurch gekennzeichnet, daß die Stellschraube (8) mit einem Außengewinde versehen ist und die sie aufnehmende Öffnung in der Messerwelle (7) mit einem daran angepaßten Innengewinde versehen ist, wobei die axiale Länge der Öffnung kleiner als die axiale Ausdehnung der Stellschraube (8) ist.

6. Häckselmaschine nach einem der vorhergehenden Ansprüche, dadurch gekennzeichnet, daß zwischen dem Kopf der Stellschraube (8) und dem durch sie beaufschlagten Ende der Messerradnabe (1) ein Druck übertragender kragenförmiger Flansch (25) vorgesehen ist.

7. Häckselmaschine nach einem der vorhergehenden Ansprüche, dadurch gekennzeichnet, daß die Sicherung für die Stellschraube (8) aus einer Sperrscheibe (9) besteht, die mit einer Aussparung versehen ist, welche an die Außenform des Stellschraubenkopfes angepaßt ist und diesen Kopf umschließt, daß die Sperrscheibe (9) über Führungszapfen (14) mit der Messerradnabe (1) verbunden ist und verschiebbar gegen den Druck mehrerer Federn (10) gehalten ist.

Fig.1

## Fig. 2